# EUROPÄISCHE PATENTSCHRIFT

(11) **EP 2 363 627 B1**
(45) Veröffentlichungstag und Bekanntmachung des Hinweises auf die Patenterteilung: **09.05.2018**
(21) Anmeldenummer: 11168387.6
(22) Anmeldetag: 19.03.2008
(51) Int. Cl.: F16L 53/00

(54) **Leitungsverbinder für Medienleitungen**
Circuit connector for fluid transfers
Liaison câblée pour tansfer de fluides

(30) Priorität: 26.04.2007 DE 202007006115 U; 09.07.2007 DE 202007009588 U; 28.08.2007 DE 102007040786; 10.03.2008 DE 202008003365 U
(43) Veröffentlichungstag der Anmeldung: 07.09.2011
(62) Teilanmeldung aus: 08735439.5
(73) Patentinhaber: Voss Automotive GmbH, 51688 Wipperfürth (DE)
(72) Erfinder: Borgmeier, Olav, 42499 Hückeswagen (DE); Brück, Eduard, 51381 Leverkusen (DE); Erb, Ulrich, 51145 Köln-Porz (DE); Gründel, Reiner, 51647 Gummersbach (DE); Lechner, Martin, 51789 Lindlar (DE); Peters, Frank, 51789 Lindlar (DE); Rosenfeldt, Sascha, 44137 Dortmund (DE); Schwarzkopf, Otfried, 51515 Kürten (DE); Gündüz, Ahmet, 42897 Remscheid (DE); Isenburg, Marco, 40885 Ratingen (DE)
(74) Vertreter: Patent- und Rechtsanwälte Dr. Solf & Zapf

(56) Entgegenhaltungen:
- EP-A- 0 764 810
- EP-A- 1 710 484
- WO-A1-2005/124219
- DE-U1-202005 004 602
- DE-U1-202006 003 590
- JP-A- 10 060 959
- US-A- 3 932 727
- US-A- 5 933 574
- US-A1- 2005 083 638
- US-B1- 6 617 556

## Beschreibung

Die vorliegende Erfindung betrifft eine elektrisch beheizbare Medienleitung bestehend aus mindestens einem Leitungsverbinder und einer Rohrleitung, gemäß Anspruch 1. Derartige Leitungsverbinder dienen zum gegenseitigen Verbinden von mindestens zwei Medienleitungen oder zur Anschlussverbindung mindestens einer Leitung an einem beliebigen Aggregat, und zwar insbesondere in einem Kraftfahrzeug. Dabei werden häufig solche Medien über die Leitungen geführt, die auf Grund eines relativ hohen Gefrierpunktes bereits bei relativ hohen, je nach Witterung durchaus möglichen Umgebungstemperaturen zum Gefrieren neigen. Dadurch können bestimmte Funktionen beeinträchtigt werden. Dies ist beispielsweise bei Wasserleitungen für die Scheibenwaschanlage der Fall sowie auch bei Leitungen für eine Harnstofflösung, die als NOₓ-Reduktionsadditiv für Dieselmotoren mit so genannten SCR-Katalysatoren eingesetzt wird.

Der vorliegenden Erfindung liegt die Aufgabe zu Grunde, einen Medienleitung der genannten Art zu schaffen, der speziell für den genannten bevorzugten Anwendungsfall geeignet ist und ein Gefrieren des jeweiligen Mediums im Verbinderbereich verhindert.

Erfindungsgemäß wird dies durch die Merkmale des Anspruchs 1 erreicht. Vorteilhafte Ausgestaltungsmerkmale der Erfindung sind in den abhängigen Ansprüchen enthalten.

Demnach sind erfindungsgemäß zumindest im Bereich des Übergangsabschnittes, d. h. außerhalb des oder der Anschlussabschnitte, elektrische Heizmittel in einer den Strömungskanal über seinen Umfang zumindest teilweise, bevorzugt aber vollständig über 360° umschließenden Anordnung vorgesehen. Diese Heizmittel können ein Einfrieren des jeweiligen Mediums innerhalb des Verbinderstückes vermeiden oder aufheben, indem ein z. B. über Nacht bei stehendem Fahrzeug eingefrorenes Medium aufgetaut wird. Dabei sind die Heizmittel derart konzipiert, dass eine definierte Beheizung bei guter elektrischer Isolation, gutem Wärmeübergang, guten mechanischen Eigenschaften und Schutz vor mechanischen Beschädigungen und Korrosion gewährleistet ist. Durch die erfindungsgemäße durchgehende Beheizung der konfektionierten Leitung über die gesamte Länge wird ein Schutz gegen Einfrieren über den gesamten Transportweg des Mediums gewährleistet.

Anhand von einigen in der Zeichnung veranschaulichten, bevorzugten Ausführungsbeispielen sollen die Erfindung, vorteilhafte Ausgestaltungen und erreichte Vorteile genauer erläutert werden. Dabei zeigen:
- Fig. 1: eine Perspektivansicht einer möglichen Ausführungsform eines Leitungsverbinders,
- Fig. 2: eine Perspektivansicht einer anderen Ausführungsform eines Leitungsverbinders,
- Fig. 3: eine Perspektivansicht einer weiteren Ausführungsform eines erfindungsgemäßen Leitungsverbinders,
- Fig. 4: eine Perspektivansicht einer weiteren Ausführungsform eines Leitungsverbinders,
- Fig. 5: eine Perspektivansicht einer weiteren Ausführungsform eines Leitungsverbinders,
- Fig. 6: eine Perspektivansicht einer anderen Ausführungsform eines erfindungsgemäßen Leitungsverbinders,
- Fig. 7: eine Perspektivansicht einer anderen Ausführungsform eines erfindungsgemäßen Leitungsverbinders,
- Fig. 8: eine weitere Ausführung des Leitungsverbinders im Längsschnitt,
- Fig. 9: eine bevorzugte Ausführung des erfindungsgemäßen Leitungsverbinders in Perspektivansicht aus einer ersten Blickrichtung,
- Fig. 10: eine bevorzugte Ausführung des erfindungsgemäßen Leitungsverbinders in Perspektivansicht auf die gegenüberliegende Seite zu der gemäß Fig. 9,
- Fig. 11: einen Längsschnitt (Schnittebene XI-XI gemäß Fig. 12) des Leitungsverbinders gemäß Fig. 9 und 10 mit einer Gehäusehälfte einer zusätzlichen äußeren Kapselung und mit einer angeschlossenen Medienleitung mit zusätzlicher Umhüllung und Beheizung,
- Fig. 12: einen Schnitt in der Ebene XII-XII gemäß Fig. 11 mit beiden Gehäusehälften der Kapselung,
- Fig. 13: eine Seitenansicht einer erfindungsgemäßen konfektionierten Medienleitung zum Teil geschnitten,
- Fig. 14: eine Seitenansicht der konfektionierten Medienleitung gemäß Fig. 13 und
- 14a, 14b: zwei elektrische Ersatzschaltbilder für die Verschaltung der Heidrähte und Heizleiter.
- Fig. 15: eine perspektivische Ansicht einer erfindungsgemäßen Fluidleitung,
- Fig. 16: einen Schnitt gemäß der Schnittlinie II-II in Fig. 15,
- Fig. 17: eine Ansicht auf ein Heizelement gemäß einer Ausführungsform der Erfindung,
- Fig. 18: eine Ansicht auf ein Leitungsrohr und ein Heizelement gemäß einer weiteren Ausführung der Erfindung.

In den verschiedenen Figuren der Zeichnung sind gleiche Teile stets mit denselben Bezugszeichen versehen.

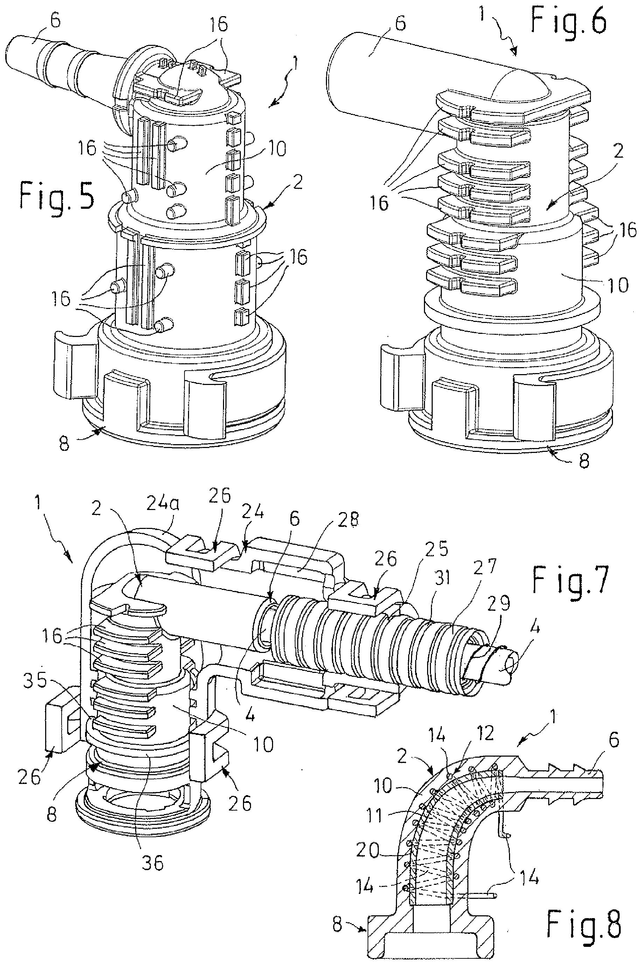

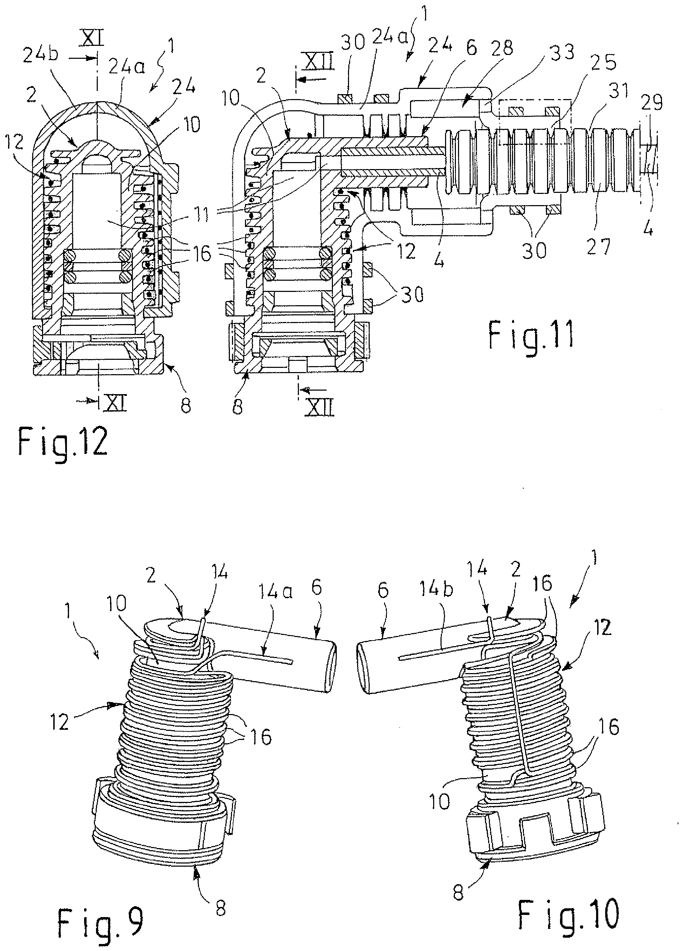

Ein erfindungsgemäßer Leitungsverbinder 1 besteht aus einem Verbinderstück 2, welches bevorzugt als einstückiges Formteil aus Kunststoff ausgebildet ist, insbesondere aus einem faserverstärkten Polyamid, wie PA6.6 GF30 oder PA12 GF30. Das Verbinderstück 2 weist mindestens einen Anschlussabschnitt 6 zur Anschlussverbindung mit einer Medienleitung 4 (nur in Fig. 7 und 11 dargestellt) oder mit einem beliebigen, nicht dargestellten Aggregat auf. Weiterhin weist das Verbinderstück einen dem Anschlussabschnitt 6 gegenüberliegenden weiteren Anschlussabschnitt 8 auf, der als Steckabschnitt geformt ist. In den dargestellten, bevorzugten Ausführungsbeispielen ist das Verbinderstück 2 als Winkelverbinder ausgebildet, wobei die Anschlussabschnitte 6 und 8 bezüglich ihrer Anschlussachsen einen bestimmten, beispielsweise rechten Winkel (90°) einschließen. Dabei sind die Anschlussabschnitte 6, 8 über einen Übergangsabschnitt 10 verbunden, der einen inneren, nur in Fig. 8, 11 und 12 erkennbaren Strömungskanal 11 aufweist.

Im Rahmen der Erfindung kann das Verbinderstück 2 auch eine beliebige andere, von den dargestellten Beispielen abweichende Ausgestaltung haben, z. B. als T-Stück oder Verteilerstück mit drei oder mehr Anschlussabschnitten, als geradliniger Durchgangsverbinder, als Winkelverbinder (z. B. V-Stück) mit einem beliebigen, vom rechten Winkel (90°) abweichenden Anschlussachsen-Winkel oder dergleichen.

Erfindungsgemäß weist das Verbinderstück 2 zumindest im Bereich des Übergangsabschnittes 10 elektrische Heizmittel 12 in einer den Strömungskanal 11 radial bzw. umfangsgemäß umschließenden Anordnung auf. Dadurch ist der erfindungsgemäße Leitungsverbinder 1 insbesondere für Leitungen in Kraftfahrzeugen zur Führung von gefriergefährdeten Medien, wie Wasser oder insbesondere Harnstoff, geeignet. Unter dem Begriff "Übergangsabschnitt" 10 ist der Bereich des Leitungsverbinders 1 bzw. des Verbinderstückes 2 zu verstehen, der nach Anschluss von Leitungen (4) und/oder an ein Aggregat noch "freiliegt" und deshalb mit Heizmitteln 12 versehen sein kann.

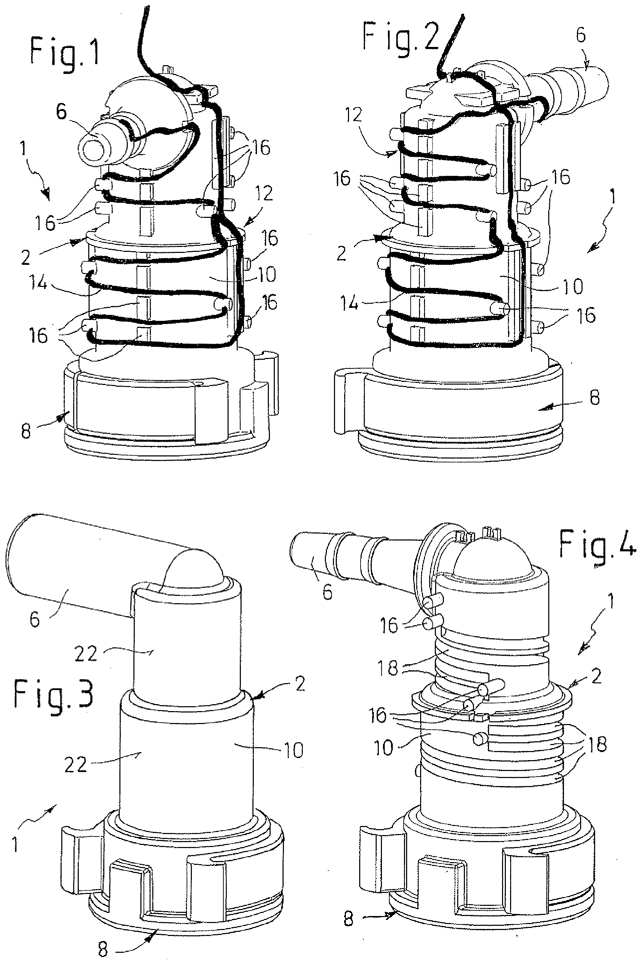

Wie sich zunächst aus Fig. 1 und 2 ergibt, kann als Heizmittel 12 mindestens ein elektrischer Heizdraht 14 (Widerstandsdraht) in einer mit einer im Wesentlichen gleichmäßigen Flächenverteilung zumindest über den Bereich des Übergangsabschnittes 10 verlaufenden Anordnung vorgesehen sein. Wie sich hierzu aus den Fig. 1, 2 sowie 4 bis 7 ergibt, weist das Verbinderstück 2 außenseitig bestimmte Formelemente zur Führung und Fixierung des außen aufgebrachten Heizdrahtes 14 auf. Als Formelemente können nach außen vorstehende Ansätze 16 bzw. Rippen und/oder - beispielsweise rillenförmige - Vertiefungen 18 (Fig. 4) vorgesehen sein. In Abhängigkeit von der Ausgestaltung und Anordnung der Formelemente 16, 18 kann der Heizdraht 14 einen beispielsweise mäanderartigen oder serpentinenartigen Verlauf zur Vermeidung einer Spulenwirkung bei Stromfluss aufweisen; vgl. dazu insbesondere Fig. 1 und 2. Alternativ dazu kann aber der Heizdraht 14 auch das Verbinderstück 2 außen spulenartig gewickelt umschließen, siehe Fig. 10 bis 12. In Fig. 4 ist dies durch einen entsprechenden, hier z. B. schraubenlinienförmigen Verlauf der rillenartigen Vertiefungen 18 angedeutet. Hierbei kann mit Vorteil im Innenbereich des Verbinderstückes 2 eine zweite, nicht erkennbare, den Strömungskanal umschließende Wicklungsspule derart angeordnet sein, dass durch einen Stromfluss durch den äußeren Heizdraht 14 eine Induktion in die innere Wicklungsspule erfolgt.

Der außen aufgebrachte Heizdraht 14 kann mit einer beispielsweise aus einem Pulverlack oder dergleichen bestehenden, isolierenden Beschichtung überdeckt sein. Es kann sich auch um eine Tauchbeschichtung handeln. Durch die isolierende Beschichtung kann der Heizdraht 14 selbst ohne eigene Isolation ausgeführt sein.

Alternativ kann der Heizdraht 14 auch in das Material des Kunststoff-Verbinderstückes 2 eingebettet (eingeformt) sein. Hierzu wird auf Fig. 8 verwiesen, wonach ein Rohrstück 20 mit dem Heizdraht 14 umwickelt und in ein Spritzwerkzeug eingelegt wird. Das mit dem Heizdraht 14 versehene Rohrstück 20 kann dann in einer beliebigen Weise mit Kunststoff umspritzt werden. Die Enden des Wicklungsdrahtes 14 sind nach außen geführt, um eine Spannung anlegen zu können. Das Rohrstück 20 kann aus Kunststoff, aber auch aus Metall bestehen, um eine gute Wärmeleitung nach innen in den Strömungskanal 11 zu erreichen.

Bei der in Fig. 3 dargestellten Ausführungsvariante kann auf einer glatten, z. B. zylindrischen Außenfläche 22 des Verbinderstückes 2 ein nicht dargestelltes flächiges Heizelement, beispielsweise in Form einer aufgeklebten Heizfolie oder von aufgedruckten Heizleiterbahnen vorgesehen sein.

Als weitere Ausführungsvariante kann als Heizmittel 12 auch das Material des Verbinderstückes 2 selbst elektrisch leitfähig ausgebildet sein.

Um eine hohe Wärmeleitfähigkeit zu erreichen, kann bei dem aus Kunststoff bestehenden Verbinderstück 2 das Kunststoffmaterial bestimmte Füllstoffe zur Erhöhung der Wärmeleitfähigkeit aufweisen. Als Füllstoffe sind Partikel aus Aluminium, Al₂O₃, Glas- und/oder Kohlefasern geeignet.

Wie sich zunächst aus Fig. 7 ergibt, kann das Verbinderstück 2 von einer äußeren Kapselung umschlossen sein. Bei der in Fig. 7 angedeuteten Ausführung kann es sich um ein zweiteiliges, aus zwei symmetrischen Gehäusehälften 24a, 24b in Form von Halbschalen (vgl. dazu auch Fig. 11 und 12) bestehendes Außengehäuse 24 handeln, von dem in Fig. 7 nur eine Gehäusehälfte 24a dargestellt ist. Dabei können die Gehäusehälften (24a, 24b) mit Vorteil über komplementäre Rastmittel 26 miteinander verbunden werden.

Alternativ ist es auch möglich, als Kapselung das gesamte Verbinderstück 2 mit einem Außengehäuse zu umspritzen. Zudem kann als Kapselung auch ein so genannter Schrumpfschlauch, Gewebeschlauch oder dergleichen vorgesehen sein. Durch die Kapselung kann zwischen dieser und dem Verbinderstück ein Luftvolumen eingeschlossen sein, wodurch eine gute Wärmeverteilung , aber auch eine thermische Isolation nach außen erreicht wird. Die äußere Beschichtung bzw. die Kapselung kann eine Wärmeisolation nach außen bewirken. Dazu ist der Kunststoff - ohne leitende Füllstoffe - mit möglichst geringer Wärmeleitfähigkeit ausgebildet.

Bei den Ausführungen mit außen aufgebrachtem Heizdraht 14 werden die Drahtenden vorzugsweise über Rastverbindungen so befestigt, dass sie zwecks Kontaktierung nach außen ragen.

Bei der in Fig. 9 bis 12 dargestellten Ausführung bilden die äußeren Ansätze 16 durch einen schraubenlinienförmigen Verlauf eine - ebenfalls entsprechend schraubenlinienförmig verlaufende - Aufnahme für den Heizdraht 14. Dabei verläuft der Heizdraht 14 gemäß Fig. 9 ausgehend von einem ersten, im Bereich der Außenfläche des Anschlussabschnittes 6 angeordneten Drahtende 14a wendelförmig über den Bereich des Übergangsabschnittes 10 und dann gemäß Fig. 10 axial zurück, so dass ein zweites Drahtende 14b ebenfalls im Bereich der Außenfläche des Anschlussabschnittes 6 liegt, und zwar vorzugsweise dem anderen Drahtende 14a etwa diametral gegenüberliegend. Auf diese Weise können die Drahtenden 14a, 14b mit Anschlussleitern oder mit Vorteil mit Heizleitern der Medienleitung 4 elektrisch verbunden werden. Somit kann der Heizdraht 14 über z. B. wendelförmige Heizleiter der Medienleitung 4 mit elektrischer Leistung (Spannung, Strom) versorgt werden.

Die Heizmittel 12 können mit einer Leistung von 3 bis 20 Watt und der Heizdraht 14 mit einer Länge von beispielsweise bis zu 200 mm ausgebildet sein. Für ein Verbinderstück 2 mit einem Innenvolumen des Strömungskanals 11 im Bereich von 0,1 bis 1,0 cm³ ist ein Leistungsquotient im Bereich von 1 bis 15 Watt / cm³ zweckmäßig. Der Heizdraht 14 kann mit negativem Temperaturkoeffizient (NTC) oder mit positivem Temperaturkoeffizient (PTC) ausgebildet sein. Eine Versorgungsspannung in der Größenordnung von 10 bis maximal 14 Volt ist zweckmäßig.

Der jeweilige Anschlussabschnitt 6 kann als Anschlussdorn zum direkten Aufstecken einer Medienleitung 4 (s. hierzu die Ausführungen gemäß Fig. 1, 2, 4 und 5) oder als in eine Steckmuffe einsteckbarer Steckerschaft (Fig. 3 und 6) ausgebildet sein.

Gemäß Fig. 7 und 9 bis 11 ist der Anschlussabscnitt 6 als hohlzylindrische Aufnahme zum direkten Einstecken der Medienleitung ausgebildet. Dabei wird die Medienleitung 4 stoffschlüssig in dem Anschlussabschnitt 6 befestigt. Für ein Verschweißen mittels Laserstrahl besteht der Anschlussabschnitt 6 zumindest bereichsweise aus einem lasertransparenten Material.

Wie weiterhin am Beispiel des Anschlussabschnittes 8 dargestellt ist, kann dieser auch als Steckmuffe zur Aufnahme eines Steckerschaftes ausgebildet sein. Hierbei können im Falle einer Steckverbindung beliebige Mittel zum insbesondere lösbaren Arretieren der Steckverbindungsteile vorgesehen sein. Dazu wird beispielhaft auf Fig. 11 und 12 verwiesen.

Wie sich noch aus Fig. 7 und auch aus Fig. 11 ergibt, kann es vor allem in Kombination mit der Kapselung, insbesondere in der Ausführung als Außengehäuse 24, und im Falle einer selbst ebenfalls beheizten Medienleitung 4 vorteilhaft sein, die Medienleitung 4 mit einer zusätzlichen Umhüllung 27 zu versehen, beispielsweise wie dargestellt in Form eines die Leitung 4 umschließenden Wellrohres. Die Umhüllung 27 dient zum mechanischen Schutz und zur thermischen Isolation für mindestens einen wendelförmig um die Medienleitung 4 verlaufenden Heizleiter 29. Dabei verläuft die Umhüllung 27 bis in das Außengehäuse 24 hinein und endet kurz vor dem Anschlussabschnitt 6. In diesem Bereich kann das Außengehäuse 24 eine erweiterte Kammer 28 zur Aufnahme von nicht dargestellten elektrischen Verbindungen zwischen den Heizdrahtenden 14a, b und den Enden des Heizleiters 23 der Medienleitung 4 aufweisen.

Das Außengehäuse 24 besitzt im Einführungsbereich der Umhüllung 27, dem Wellrohr, an seiner Innenwandung umlaufende Rippen 25, die in die Wellentäler 31 des Wellrohrs hineinragen. Erfindungsgemäß wird eine Formschlussverbindung zwischen dem Außengehäuse 24 und der Umhüllung 27 gebildet. Zudem ist in Fig. 7 zu erkennen, dass ebenfalls eine Formschlussverbindung zwischen dem Außengehäuse 24 und dem Verbinderstück 2 vorhanden ist. Hierzu weist das Außengehäuse 24 im Bereich des Anschlussabschnitts 8 des Verbinderstücks 2 eine Innennut 35 auf, in die ein Ringbund 36 des Verbinderstücks 2 hineinragt.

Wie sich weiterhin aus Fig. 11 ergibt, können die Gehäusehälften 24a, b des Außengehäuses 24 auch über äußere, z. B. nach Art von Spannschellen, Spanndrähten oder Federklammern ausgebildete Halteelemente 30 verbunden sein.

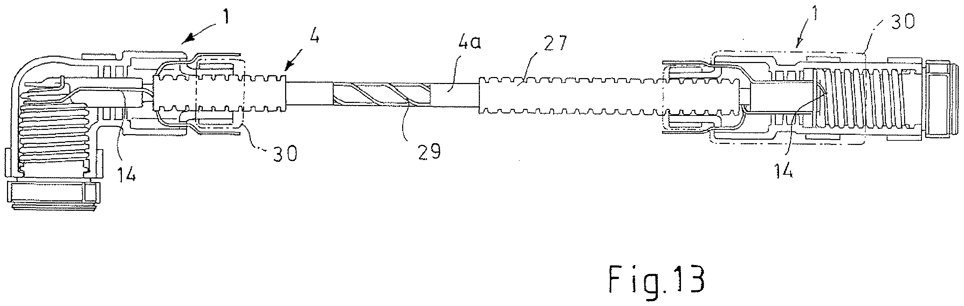

Die vorliegende Erfindung umfasst auch eine konfektionierte Medienleitung, wie sie in Fig. 13 dargestellt ist. Diese konfektionierte Medienleitung besteht aus einer inneren Rohrleitung 4a mit einem am Umfang angeordneten Heizleiter 29, wie dies bereits in Fig. 7 dargestellt ist. Die Rohrleitung 4a mit dem Heizleiter 29 wird von einer äußeren Umhüllung 27 umschlossen. Diese äußere Umhüllung 27 ist vorzugsweise als Wellrohr hergestellt. Dabei kann es sich um ein ringgewelltes oder um eine spiralgewelltes Wellrohr handeln. An den beiden Enden der derartig ausgebildeten Medienleitung 4 sind jeweils Leitungsverbinder, wie zu den Fig. 1 bis 10 erläutert, angeschlossen. Im dargestellten Ausführungsbeispiel ist einendig ein Leitungsverbinder 1, der als Winkelstecker ausgebildet ist, befestigt, und an dem anderen Ende ist ein gerader Steckanschluss als Leitungsverbinder 1 vorgesehen. In den dargestellten Beispielen sind die Leitungsverbinder 1 jeweils endseitig als Muffenteil ausgebildet, sie können jedoch ebenso als Steckerteil ausgebildet sein.

Wie in Fig. 13 dargestellt ist, ist die Umhüllung 27 in das Außengehäuse 24 des Leitungsverbinders 1 hineingeführt und mit dem Außengehäuse 24 formschlüssig verbunden. Der die Rohrleitung 4a umgebende Heizleiter 29 ist um diese spiralförmig umwickelt und insbesondere aus zwei parallel verlaufenden Drahtwicklungen 29a, b gebildet. Diese beiden Drahtwicklungen 29a, b können aus einem durchgehenden Draht bestehen, wobei die beiden Anschlussenden dann an dem gleichen Rohrleitungsende vorhanden sind. Sie können aber auch aus zwei separaten Drähten gebildet werden. Der Heizleiter 29 ist vorzugsweise mit einem Klebeband umwickelt und wird dadurch auf der Rohrleitung 4a fixiert. Alternativ kann es ebenfalls möglich sein, dass der Heizleiter 29 mittels einer äußeren Lack- oder Kleberschicht auf der Rohrleitung 4a angeordnet ist. Insbesondere, wenn längs der Rohrleitung 4a unterschiedliche Heizleistungen gewünscht sind, kann die Dichte der Windungszahl und/oder der elektrische Widerstand entlang der Rohrleitung 4a variieren, so dass hierdurch abschnittsweise unterschiedliche Heizleistungen erzeugt werden können, z. B. in Siphonbereichen oder Fahrtwind beaufschlagten Bereichen der Medienleitung, bei denen eine erhöhte Gefrierneigung des Mediums besteht. Das innerhalb der Leitungsverbinder 1 vorhandene Verbinderstück 2 kann mit der Rohrleitung 4a über eine Steckverbindung verbunden sein, doch liegt es ebenfalls im Rahmen der Erfindung, wenn die Rohrleitung 4a mit dem Verbinderstück 2 stoffschlüssig beispielsweise durch Verschweißen oder Verkleben verbunden ist.

Weiterhin ist es zweckmäßig, wenn zwischen der Rohrleitung 4a und der Leitungsumhüllung 27 ein definierter Luftspalt ausgebildet ist. Dies kann beispielsweise durch die Ringwellung selbst erzielt werden oder aber durch innerhalb des Wellrohrs angeordnete Abstandshalter oder dergleichen. Zu einer besseren Abdichtung kann es erfindungsgemäß ebenfalls vorteilhaft sein, wenn zwischen dem Außengehäuse 24 des Leitungsverbinders 1 und dem Verbinderstück 2 insbesondere im Verbindungsbereich der Leitungsumhüllung 27 mit dem Leitungsverbinder 1 eine Vergussmasse 30 eingebracht ist. Die Vergussmasse 30 stellt einerseits einen mechanischen Schutz dar, sie kann andererseits auch dazu dienen, die IP-Schutzart durch Abdichtung zu verbessern. In Fig. 13 ist die Anordnung der Vergussmasse 30 durch eine Strichelung eingezeichnet. Hierbei ist sie z. B. im Übergangsbereich des Winkelsteckers 1 zur Rohrleitung 27 nur partiell als Teil-Verguss ausgebildet, und bei der geraden Steckverbindung ist die Vergussmasse 30 sowohl im Übergangsbereich zur Rohrleitung 27 als auch als äußere Umhüllung ausgebildet.

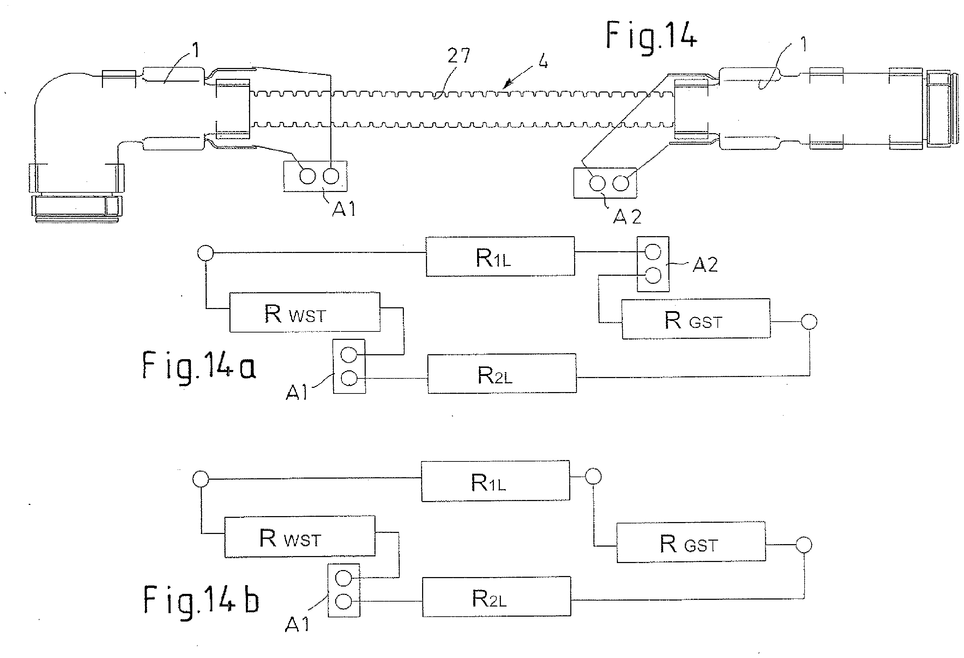

Insbesondere, wenn die erfindungsgemäßen konfektionierten Leitungen in der Nähe von Hitze erzeugenden Bauteilen verlegt werden müssen, kann es zweckmäßig sein, wenn die konfektionierte Leitung über ihre Länge gesehen ganz oder teilweise von einer Hitzeschutzschicht umgeben ist. Diese Hitzeschutzschicht kann z. B. von einer Folie, wie einer metallisierten, Wärmestrahlung reflektierenden Folie, gebildet werden. Weiterhin kann zum mechanischen Schutz und beispielsweise zum Klapperschutz auch insbesondere um die äußere Umhüllung 27 eine polsternde Schicht, beispielsweise aus Moosgummi oder dergleichen, aufgebracht werden. Auch ist es denkbar, noch eine zusätzliche äußere thermische Isolationsschicht anzuordnen. Die Anordnung einer äußeren Umhüllung bzw. einer Schutzschicht oder Armierung ist in Fig. 14 abschnittsweise durch die Außenschicht 27a im Schnitt dargestellt. In Fig. 14 ist dargestellt, auf welche Weise die Heizdrähte 14 der Leitungsverbinder 1 und die Heizleitung 29 der Rohrleitung 4a miteinander elektrisch verschaltet werden können. In Fig. 14a ist dargestellt, dass jeweils der Heizdraht eines der Leitungsverbinder 1 mit einem der Wicklungsdrähte der Drahtwicklungen 29a, b elektrisch in Reihe geschaltet ist und die Anschlussenden dieser beiden Reihenschaltungen an beiden Leitungsverbindern 1 nach außen geführt sind, wo dann ein Anschluss einer Spannungsversorgung und/oder eine Weiterverbindung erfolgen kann. Hierbei bedeutet R_{WST} der Widerstand der Heizdrahtwicklung 14 eines Leitungsverbinders 1, der im dargestellten Beispiel als Winkelstecker ausgebildet ist, und R_{1L} der elektrische Widerstand einer der Drähte der Drahtwicklungen 29a, b, die die Rohrleitung 4a umgeben. R_{GST} ist der Widerstand des Heizdrahtes 14 des geraden Steckverbinders, und R_{2L} ist der elektrische Widerstand des anderen Wickeldrahtes der Drahtwicklung 29a, b um die Rohrleitung 4a. Die außerhalb der Leitungsverbinder 1 liegenden Anschlüsse sind jeweils mit A1 und A2 gekennzeichnet. In Fig. 14b ist eine andere Verschaltung dargestellt. Hierbei sind die Heizdrähte 14 der Leitungsverbinder 1 und die der Drahtwicklungen 29a, b um die Rohrleitung 4a derart verbunden, dass eine elektrische Reihenschaltung aller Drähte gegeben ist. Die Anschlussenden zum Anschluss einer Spannungsversorgung der Reihenschaltung sind im Bereich eines Leitungsverbinders 1 nach außen geführt, und hierbei sind die Widerstände der einzelnen Drähte wie in Fig. 14a gekennzeichnet. Hierbei ist nur ein äußerer Leitungsanschluss A1 vorhanden. Die Größe der einzelnen Widerstände kann von einer Ausführungsform einer erfindungsgemäßen konfektionierten Leitung zu einer anderen jeweils variieren und hängt von der jeweils gewünschten Heizleistung ab.

Es kann weiterhin zweckmäßig sein, die Steigung der Heizdraht-Bewicklung 14 an den Endbereichen der Rohrleitung 4a zu verringern. Eine weitere Ausgestaltung kann darin bestehen, zu der umfangsgemäßen Wicklung 14 des Heizdrahtes eine weitere Wicklung im Rohrendbereich der Rohrleitung 4a anzuordnen, um zusätzliche Drahtlänge zur Verfügung zu stellen. Hierdurch wird die Möglichkeit geschaffen, beim Kontaktieren Draht aus dem Rohrleitungsende herauszuziehen.

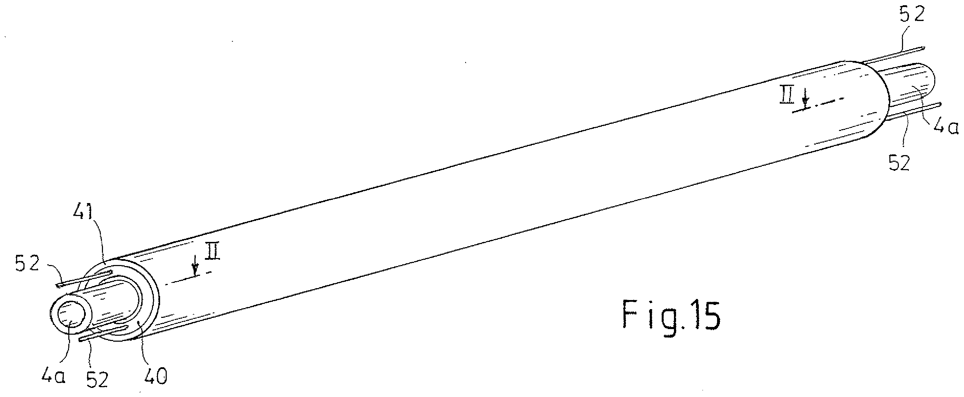

In den Fig. 15 bis 18 sind zweckmäßige weitere Ausführungen eines erfindungsgemäßen Heizleiters, der in diesen Ausführungen als Flächenheizelement 40 ausgebildet ist, dargestellt.

Wie in Fig. 15 dargestellt ist, umfasst eine erfindungsgemäße beheizbare Medienleitung die innere Rohrleitung 4a und ein auf dessen Oberfläche angeordnetes elektrisches Heizelement 40. Um das aufgebrachte elektrische Heizelement 40 herum kann ein Schutzmantel 41 umfangsgemäß aufgebracht sein. Die Rohrleitung 4a besteht vorteilhafterweise aus Kunststoff. Der äußere Schutzmantel 41 kann aus einer Klebebandwicklung oder aus einer Extrusionsschicht oder einem Schrumpfschlauch aus Kunststoff gebildet sein und bildet einen äußeren Schutz gegen Beschädigung und Feuchtigkeit. Es wäre aber auch eine entsprechende Beschichtung auf der nach außen weisenden Oberfläche des Heizelementes 40 möglich. Zusätzlich ist die beheizbare Medienleitung vorzugsweise von einem Wellrohr oder einem Schutzschlauch oder einer Schutzhülle umgeben, und zwar gegebenenfalls unter Einschluss eines umfänglichen Luftspaltes.

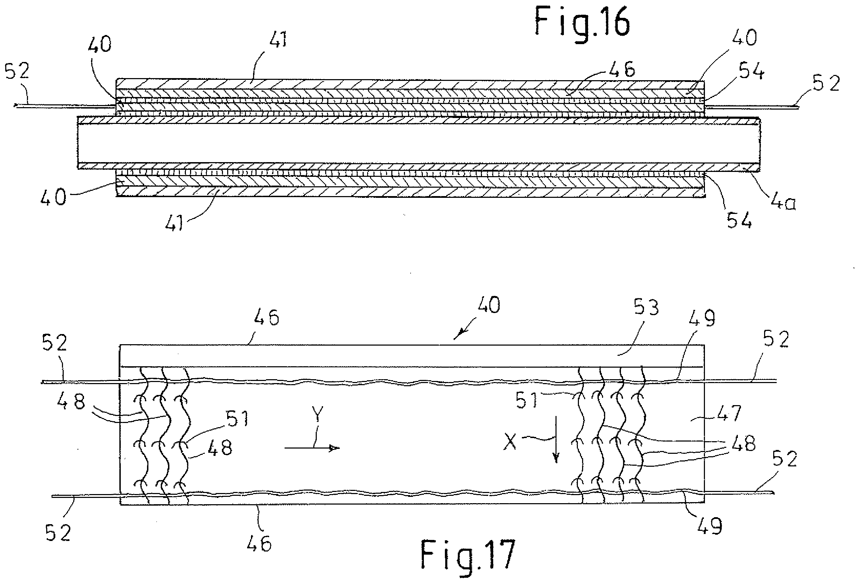

Wie in den Fig. 16 und 17 dargestellt ist, ist das erfindungsgemäße Heizelement 40 als Flächenheizelement 43 ausgebildet. Dieses Flächenheizelement 43 ist streifenförmig und kann, wie in der Fig. 16 dargestellt ist, in Längsrichtung der Rohrleitung 4a verlaufend mit seinen Längsrändern 46 überlappend um die Rohrleitung 4a gelegt werden. Alternativ können die Längsränder 46 auch aneinanderstoßen.

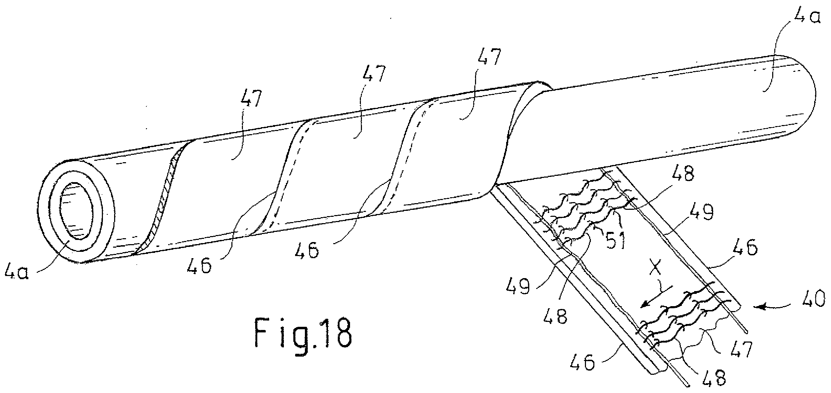

In Fig. 18 ist alternativ dargestellt, dass das streifenförmige Flächenheizelement 43 spiralförmig um die Rohrleitung 4a gewickelt wird. Hierbei ist es entweder möglich, eine überlappende Ausführung der spiralförmigen Wicklung zu wählen wie dargestellt, oder aber eine Wicklung, wobei die Längsränder 46 des streifenförmigen Flächenheizelementes 43 aneinander anstoßen.

Es liegt im Rahmen der Erfindung, nur eine Lage aus dem erfindungsgemäßen Flächenheizelement 43 zu bilden oder aber zur Erhöhung der Heizleistung mehrere Lagen des Flächenheizelementes 43 um die Rohrleitung 4a herum übereinander anzuordnen.

Das erfindungsgemäße Flächenheizelement 43 besteht aus einem Träger 47, auf dem elektrische Heizleiter 48 fixiert sind. Die elektrischen Heizleiter 48 werden mit auf dem Träger 47 angeordneten Kontaktleiten 49 elektrisch leitend verbunden. Vorteilhafterweise handelt es sich um einen Träger 47 aus einem textilen Vliesmaterial, einem Gewirk oder einem Gewebe. Es ist jedoch ebenfalls möglich, den Träger 47 aus einem Schaumstoff aus Kunststoff zu bilden oder aus einer Kombination der vorstehenden Materialien. Die elektrischen Heizleiter 48 sind wellenförmig oder mäanderförmig und/oder maschenförmig auf dem Träger 47 verlegt. Vorteilhafterweise bestehen die elektrischen Heizleiter 48 aus Karbonfasern. Die Verwendung von Karbonfasern zur Herstellung der elektrischen Leiter bringt die Vorteile einer sehr hohen Zugfestigkeit bei geringstem Gewicht und einer guten elektrischen Leitfähigkeit; weiterhin ist hierdurch eine Transparenz gegenüber Röntgenstrahlen gegeben, was bei Kontrolluntersuchungen vorteilhaft ist. Zudem ist eine Beständigkeit gegen Chemikalien und eine hohe Temperaturfestigkeit gewährleistet. Außerdem lassen sich Karbonfasern leicht verarbeiten. Die elektrischen Heizleiter 48 sind insbesondere über die gesamte Fläche des Flächenheizelementes 43 gleichmäßig verteilt angeordnet. Zweckmäßigerweise verläuft die Haupterstreckungsrichtung X der elektrischen Heizleiter 48 in Querrichtung des streifenförmigen Trägers 47. Die Kontaktleiter 49, die ebenfalls aus Karbonfasern bestehen können oder aber aus metallischem Material, können gradlinig und/oder wellenförmig verlaufen. Vorteilhafterweise sind mehrere parallel verlaufende Kontaktleiter 49 verlegt, wie dies in Fig. 17 dargestellt ist. Hierbei laufen die Kontaktleiter 49 quer, insbesondere senkrecht zur Haupterstreckungsrichtung X der elektrischen Heizleiter 48. Weiterhin ist in den Fig. 16 und 17 zu erkennen, dass die Kontaktleiter 49 jeweils an beiden Endbereichen der Heizleiter 48 bzw. im Bereich der beiden Längsränder 46 des Trägers 47 angeordnet sind. Die Heizleiter 48 und die Kontaktleiter 49 sind durch Vernähen mittels textiler Nähfäden 51 auf dem Träger 47 fixiert. Hierbei verläuft die Nahtrichtung Y der Nähfäden 51 in der Haupterstreckungsrichtung X der Heizleiter 48. Erfindungsgemäß kann es zweckmäßig sein, wenn der textile Träger nur in einem Teilbereich, insbesondere in einem Überlappungsbereich 53 Heizleiter frei ausgebildet ist. Hierdurch wird gewährleistet, dass eine gleichförmige Heizleistung über die gesamte Leitungslänge vorhanden ist. Es ist ebenso möglich, den Überlappungsbereich 53 an beiden Längsrändern des Trägers 47 auszubilden.

Um eine einfache Aufbringung des Flächenheizelementes 43 auf der Rohrleitung 4a zu gewährleisten, ist der Träger 47 vorteilhafterweise auf seiner von den Heizleitern 48 abgekehrten Rückseite mit einem temperaturbeständigen Haftkleber 54 beschichtet, wodurch eine innige Anlage des Flächenheizelementes 43 auf der Oberfläche der Rohrleitung 4a gewährleistet wird, so dass eine gute Wärmeübertragung möglich ist. Vorteilhafterweise ist der Träger 47 feuchtigkeitsabweisend ausgerüstet. Die elektrischen Kontaktleiter 49 sind vorzugsweise flexibel und verlaufen zwischen den Heizleitern 48 und dem Träger 47. Die Kontaktleiter 49 werden an beiden Enden für eine Reihenschaltung verschiedener Leitungen oder vorzugsweise nur an einem der Enden der erfindungsgemäßen Leitung 1 mittels zweier Anschlussdrähte 52 herausgeführt. Ebenso ist es möglich, an jedem der beiden Enden nur einen Anschlussdraht 52 herauszuführen.

Es liegt ebenfalls im Rahmen der Erfindung, wenn die Kontaktleiter 49 in den textilen Träger 47 eingebunden sind. Die elektrischen Heizleiter 48 können entweder parallel zueinander verlaufend angeordnet sein, sie können aber auch einander überlappend ausgebildet sein. Durch eine derartige überlappende Anordnung der Heizleiter 48 wird eine gleichmäßige Kontaktierung der Heizleiter 48 über die gesamte Fläche und eine gleichförmige Stromverteilung erreicht, so dass selbst bei einem einzelnen Bruch eines Heizleiterabschnittes hierdurch keine wesentliche Beeinträchtigung der Heizleistung auftritt. Insbesondere, wenn mehrere parallel verlaufende Kontaktleiter 49 vorhanden sind, wobei ebenfalls eine wellenförmige Anordnung möglich ist oder aber auch ein maschenförmiger Verbund der Kontaktleiter 49 vorhanden sein kann, wird ebenfalls eine sichere Kontaktierung zu den Heizleitern 48 ermöglicht. Die Erfindung wird nur durch die folgenden Ansprüche definiert.

## Patentansprüche

1. Konfektionierte, elektrisch beheizbare Medienleitung (4), bestehend aus einer Rohrleitung (4a) mit einem am Umfang angeordneten Heizleiter (29) sowie mindestens einem an einem Rohrleitungsende der Rohrleitung (4a) befestigten beheizbaren Leitungsverbinder (1), wobei der Leitungsverbinder (1) aus einem als einstückiges Kunststoff-Formteil ausgebildeten Verbinderstück (2) mit einem mit der Rohrleitung (4a) verbundenen Anschlussabschnitt (6), mindestens einem weiteren Anschlussabschnitt (8) zur Anschlussverbindung mit einer Medienleitung oder mit einem Aggregat sowie einem an die Anschlussabschnitte (6, 8) angrenzenden und diese verbindenden Übergangsabschnitt (10) mit einem inneren Strömungskanal (11) besteht, wobei ein Anschlussabschnitt (8) als Steckerteil für eine lösbare Steckverbindung und ein Anschlussabschnitt (6) als Muffenteil für eine Steckverbindung der Medienleitung (4) ausgebildet ist, wobei zumindest im Bereich des Übergangsabschnittes (10) elektrische Heizmittel vorgesehen sind,
**dadurch gekennzeichnet, dass** der Leitungsverbinder (1) zumindest im Bereich des Übergangsabschnittes (10) elektrische Heizmittel (12) in einer den Strömungskanal (11) umfangsgemäß umschließenden Anordnung aufweist, wobei als Heizmittel (12) des Leitungsverbinders (1) mindestens ein Heizdraht (14) in einer mit einer etwa gleichmäßigen Flächenverteilung zumindest über den Bereich des Übergangsabschnittes (10) verlaufenden Anordnung vorgesehen ist und der Heizdraht (14) das Verbinderstück außen spulenartig gewickelt umschließt, wobei der mit der Rohrleitung (4a) verbundene Anschlussabschnitt (6) als hohlzylindrische Aufnahme zum direkten Einstecken des Endes der Rohrleitung (4a) ausgebildet ist, wobei die Rohrleitung (4a) stoffschlüssig durch Verschweißen befestigt ist und der Anschlussabschnitt (6) zumindest bereichsweise aus einem für Laserstrahlen transparentem Material besteht, so dass die Rohrleitung (4a) durch Verschweißen mittels Laserstrahl befestigt ist, sowie das Verbinderstück (2) von einer äußeren Kapselung (24) umschlossen ist und die Kapselung (24) auch zum Umschließen eines Endes der Rohrleitung (4a) und eines Endes einer Leitungs-Umhüllung (27) ausgebildet ist sowie der Heizleiter (29) die Rohrleitung (4a) spiralförmig umgibt und aus zwei parallel verlaufenden Drahtwicklungen (29a, b) besteht.

2. Konfektionierte Medienleitung nach Anspruch 1,
**dadurch gekennzeichnet, dass** im Innenbereich zumindest eine weitere Wicklungsspule derartig im Bereich des Strömungskanals (11) angeordnet ist, dass durch einen Stromfluss durch den äußeren Heizdraht (14) eine Induktion in die innere Wicklungsspule zur Erzeugung von Wärme erfolgt.

3. Konfektionierte Medienleitung nach Anspruch 1 oder 2,
**dadurch gekennzeichnet, dass** das Verbinderstück (2) Formelemente (16, 18) zur Führung und Fixierung des außen aufgebrachten Heizdrahtes (14) aufweist.

4. Konfektionierte Medienleitung nach einem der Ansprüche 1 bis 3,
**dadurch gekennzeichnet, dass** die Kapselung (24) zur Wärmeisolation mit geringer Wärmeleitfähigkeit ausgebildet ist, wobei die Kapselung (24) als Außengehäuse aus zwei symmetrischen Gehäusehälften gebildet ist, die zwei Halbschalen des Außengehäuses bilden.

5. Konfektionierte Medienleitung nach Anspruch 4,
**dadurch gekennzeichnet, dass** zwischen der Kapselung (24) und der Verbinderstück (2) ein Luftvolumen zur Wärmeverteilung und Wärmeisolation eingeschlossen ist.

6. Konfektionierte Medienleitung nach einem der Ansprüche 1 bis 5,
**dadurch gekennzeichnet, dass** die Kapselung (24) mit dem Verbinderstück (2) formschlüssig verbunden ist, wobei insbesondere Öffnungen (33) im Außengehäuse vorhanden sind, die zum Herausführen von Verbindungsdrähten für den Anschluss der Heizmittel (12, 14) dienen, wobei diese Öffnungen (33) insbesondere in der Teilungsebene des Außengehäuses (24) liegen.

7. Konfektionierte Medienleitung nach einem der Ansprüche 1 bis 6,
**dadurch gekennzeichnet, dass** die Umhüllung (27), insbesondere in Form eines Wellrohrs, die den Heizleiter (29) aufweisende Rohrleitung (4a) umschließt und in das Außengehäuse (24) des Leitungsverbinders (1) hineingeführt und mit diesem formschlüssig verbunden ist.

8. Konfektionierte Medienleitung nach einem der Ansprüche 1 bis 7,
**dadurch gekennzeichnet, dass** der Heizleiter (29) mittels eines Klebebandes auf der Rohrleitung (4a) fixiert ist.

9. Konfektionierte Medienleitung nach einem der Ansprüche 1 bis 8,
**dadurch gekennzeichnet, dass** zwischen dem Außengehäuse (24) und dem Verbinderstück (2) sowie insbesondere im Verbindungsbereich der Leitungsumhüllung (27) innerhalb des Außengehäuses (24) eine Vergussmasse eingebracht ist.

10. Konfektionierte Medienleitung nach einem der Ansprüche 1 bis 9,
**dadurch gekennzeichnet, dass** an jedem Ende der beheizbaren Rohrleitung (4a) ein Leitungsverbinder (1) angeschlossen ist und die Rohrleitung (4a) mit zwei parallel verlaufenden Drahtwicklungen (29a, b) umwickelt ist.

11. Konfektionierte Medienleitung nach Anspruch 10,
**dadurch gekennzeichnet, dass** die Heizdrähte (14) der Leitungsverbinder (1) und die Drahtwicklungen (29a, b) der Rohrleitung (4a) derart verbunden sind, dass eine elektrische Reihenschaltung gegeben ist, wobei die Anschlussenden zum Anschließen einer äußeren Spannungsversorgung der Reihenschaltung im Bereich eines Leitungsverbinders (1) nach außen geführt sind.

12. Konfektionierte Medienleitung nach Anspruch 10,
**dadurch gekennzeichnet, dass** der Heizdraht (14) eines der Leitungsverbinder(1) jeweils mit einer der Drahtwicklungen (29a, b) der Rohrleitung (4a) elektrisch in Reihe geschaltet ist, wobei die Anschlussenden der beiden Reihenschaltungen an jeweils einem der beiden Leitungsverbinder (1) nach außen geführt sind zum Anschluss einer Spannungsversorgung und/oder zur Weiterverbindung.

13. Konfektionierte Medienleitung nach einem der Ansprüche 1 bis 12,
**dadurch gekennzeichnet, dass** der Heizleiter (29) entlang der Rohrleitung (4a) derart angeordnet oder ausgebildet ist, dass sein elektrischer Widerstand abschnittsweise unterschiedlich ist, so dass abschnittsweise unterschiedliche Heizleistungen erzeugt werden.

## Claims

1. Prefabricated, electrically heatable media line (4), consisting of a pipeline (4a) with a heating conductor (29) arranged at the circumference, and with at least one heatable line connector (1) fastened to a pipeline end of the pipeline (4a), wherein the line connector (1) consists of a connector piece (2), formed as an integral plastics moulding, with a connection portion (6) connected to the pipeline (4a), at least one further connection portion (8) for connecting to a media line or to a unit, and a transition portion (10), adjoining the connection portions (6, 8) and connecting the latter, with an inner flow duct (11), wherein one connection portion (8) is configured as a plug part for a releasable plug connection and one connection portion (6) is configured as a sleeve part for a plug connection of the media line (4), wherein electric heating means are provided at least in the region of the transition portion (10),
**characterized in that** the line connector (1) has, at least in the region of the transition portion (10), electric heating means (12) in an arrangement circumferentially enclosing the flow duct (11), wherein, as heating means (12) of the line connector (1), at least one heating wire (14) is provided in an arrangement extending with an approximately uniform surface distribution at least over the region of the transition portion (10), and the heating wire (14) encloses the connector piece externally in a manner wound in a coil-like manner, wherein the connection portion (6) connected to the pipeline (4a) is configured as a hollow-cylindrical receptacle for directly plugging in the end of the pipeline (4a), wherein the pipeline (4a) is fastened in a materially bonded manner by welding and the connection portion (6) consists at least regionally of a material that is transparent to laser beams, such that the pipeline (4a) is fastened by welding by means of a laser beam, and the connector piece (2) is enclosed by an external encapsulation (24) and the encapsulation (24) is also configured to enclose one end of the pipeline (4a) and one end of the line sheath (27), and the heating conductor (29) encloses the pipeline (4a) in a spiral shape and consists of two wire windings (29a, b) extending in a parallel manner.

2. Prefabricated media line according to Claim 1,
**characterized in that**, in the inner region, at least one further winding coil is arranged in the region of the flow duct (11) such that, as a result of a current through the outer heating wire (14), induction takes place into the inner winding coil in order to generate heat.

3. Prefabricated media line according to Claim 1 or 2,
**characterized in that** the connector piece (2) has shaped elements (16, 18) for guiding and fixing the externally applied heating wire (14).

4. Prefabricated media line according to one of Claims 1 to 3,
**characterized in that** the encapsulation (24) is configured with low thermal conductivity for thermal insulation, wherein the encapsulation (24) is formed as an outer housing made of two symmetrical housing halves which form two half-shells of the outer housing.

5. Prefabricated media line according to Claim 4,
**characterized in that** an air volume for heat distribution and thermal insulation is included between the encapsulation (24) and the connector piece (2).

6. Prefabricated media line according to one of Claims 1 to 5,
**characterized in that** the encapsulation (24) is connected to the connector piece (2) in a form-fitting manner, wherein in particular openings (33) are provided in the outer housing, which serve to pass out connecting wires for the connection of the heating means (12, 14), wherein these openings (33) are located in particular in the dividing plane of the outer housing (24).

7. Prefabricated media line according to one of Claims 1 to 6,
**characterized in that** the sheath (27), in particular in the form of a corrugated pipe, encloses the pipeline (4a) having the heating conductor (29), and leads into the outer housing (24) of the line connector (1) and is connected thereto in a form-fitting manner.

8. Prefabricated media line according to one of Claims 1 to 7,
**characterized in that** the heating conductor (29) is fixed to the pipeline (4a) by means of an adhesive strip.

9. Prefabricated media line according to one of Claims 1 to 8,
**characterized in that**, between the outer housing (24) and the connector piece (2), and in particular in the connecting region of the line sheath (27), a casting compound has been introduced within the outer housing (24).

10. Prefabricated media line according to one of Claims 1 to 9,
**characterized in that** a line connector (1) is connected to each end of the heatable pipeline (4a), and the pipeline (4a) is wound with two wire windings (29a, b) extending in a parallel manner.

11. Prefabricated media line according to Claim 10,
**characterized in that** the heating wires (14) of the line connectors (1) and the wire windings (29a, b) of the pipeline (4a) are connected such that there is an electrical series connection, wherein the connection ends for connecting an external voltage supply of the series connection are guided outwards in the region of one line connector (1).

12. Prefabricated media line according to Claim 10,
**characterized in that** the heating wire (14) of one of the line connectors (1) is connected electrically in series in each case with one of the wire windings (29a, b) of the pipeline (4a), wherein the connection ends of the two series connections are guided outwards at in each case one of the two line connectors (1) in order to connect a voltage supply and/or for further connection.

13. Prefabricated media line according to one of Claims 1 to 12,
**characterized in that** the heating conductor (29) is configured or arranged along the pipeline (4a) such that its electrical resistance is regionally different, with the result that regionally different heat outputs are produced.

## Revendications

1. Conduite de fluides (1) confectionnée à chauffage électrique, constituée d'au moins une conduite tubulaire (4a) munie d'un conducteur chauffant (29) disposé à sa périphérie et d'au moins un raccord de conduite (1) chauffant fixé à une extrémité de conduite tubulaire de la conduite tubulaire (4a), dans laquelle le raccord de conduite (1) est constitué d'une pièce de connexion (2) réalisée sous la forme d'une partie moulée en matière plastique d'un seul tenant comportant une section de raccordement (6) reliée à la conduite tubulaire (4a), au moins une autre section de raccordement (8) destinée à être raccordée à une conduite de fluides ou à un groupe moteur ainsi qu'une section de transition (10) adjacente aux sections de raccordement (6, 8) et les reliant entre elles, comportant un canal d'écoulement intérieur (11), dans lequel une section de raccordement (8) est réalisée sous la forme d'une partie d'enfichage mâle destinée à une liaison par enfichage amovible et une section de raccordement (6) est réalisée sous la forme d'une partie d'enfichage femelle destinée à une liaison par enfichage de la conduite de fluides (4), dans lequel il est prévu au moins dans la zone de la section de transition (10) des moyens de chauffage électriques,
**caractérisée en ce que** le raccord de conduite (1) comporte, au moins dans la zone de la section de transition (10), des moyens de chauffage électriques (10) agencés de manière à entourer circonférentiellement le canal d'écoulement (11), dans lequel il est prévu, en tant que moyens de chauffage (12) du raccord de conduite (1), au moins un fil chauffant (14) agencé de manière à s'étendre avec une répartition bidimensionnelle sensiblement régulière au moins à travers la zone de la section de transition (10), et le fil chauffant (14) entoure la pièce de connexion de manière enroulée sous la forme d'une bobine extérieure, dans lequel la section de raccordement (6) reliée à la conduite tubulaire (4a) est réalisée sous la forme d'un logement cylindrique creux permettant d'insérer directement l'extrémité de la conduite tubulaire (4a), dans lequel la conduite tubulaire (4a) est fixée par soudage avec complémentarité de matériau et la section de raccordement (6) est constituée au moins par zones d'un matériau transparent à des faisceaux laser de manière à ce que la conduite tubulaire (4a) soit fixée par soudage au moyen d'un faisceau laser, et la pièce de connexion (2) est entourée par une encapsulation extérieure (24) et l'encapsulation (24) est également réalisée de manière à entourer une extrémité de la conduite tubulaire (4a) et une extrémité d'une enveloppe de conduite (27) et le conducteur chauffant (29) entoure en spirale la conduite tubulaire (4a) et est constitué de deux enroulements de fil (29a, b) s'étendant parallèlement.

2. Conduite de fluides confectionnée selon la revendication 1,
**caractérisée en ce que**, dans la zone intérieure, il est prévu au moins une autre bobine d'enroulement disposée dans la zone du canal d'écoulement (11) de telle manière qu'une induction se produise dans la bobine d'enroulement intérieure par passage d'un courant à travers le fil chauffant (14) extérieur afin de produire de la chaleur.

3. Conduite de fluides confectionnée selon la revendication 1 ou 2,
**caractérisée en ce que** la pièce de connexion (2) comporte des éléments de formage (16, 18) permettant de guider et de fixer le fil chauffant (14) extérieur mis en place.

4. Conduite de fluides confectionnée selon l'une des revendications 1 à 3,
**caractérisée en ce que** l'encapsulation (24) est réalisée de manière à présenter une plus faible conductivité thermique à des fins d'isolation thermique, dans lequel l'encapsulation (24) est réalisée sous la forme d'un boîtier extérieur constitué de deux moitiés de boîtier symétriques qui forment deux demi-coques du boîtier extérieur.

5. Conduite de fluides confectionnée selon la revendication 4,
**caractérisée en ce qu'**un volume d'air est enfermé à des fins de répartition thermique et d'isolation thermique entre l'encapsulation (24) et la pièce de connexion (2).

6. Conduite de fluides confectionnée selon l'une des revendications 1 à 5,
**caractérisée en ce que** l'encapsulation (24) est reliée par complémentarité de forme à la pièce de connexion (2), dans lequel il est notamment prévu dans le boîtier extérieur des ouvertures (33) servant à extraire des fils de connexion destinés au raccordement des moyens chauffants (12, 14), dans lequel lesdites ouvertures (33) se situent notamment dans le plan de division du boîtier extérieur (24).

7. Conduite de fluides confectionnée selon l'une des revendications 1 à 6,
**caractérisée en ce que** l'enveloppe (27), notamment sous la forme d'un tube ondulé, entoure la conduite tubulaire (4a) comportant le conducteur chauffant (29) et est inséré dans le boîtier extérieur (24) du raccord de conduite (1) et est relié à celui-ci par complémentarité de forme.

8. Conduite de fluides confectionnée selon l'une des revendications 1 à 7,
**caractérisée en ce que** le conducteur chauffant (29) est fixé à la conduite tubulaire (4a) au moyen d'un ruban adhésif.

9. Conduite de fluides confectionnée selon l'une des revendications 1 à 8,
**caractérisée en ce qu'**une masse de coulée est introduite entre le boîtier extérieur (24) et la pièce de connexion (2) et en particulier dans la zone de connexion de l'enveloppe de conduite (27), à l'intérieur du boîtier extérieur (24).

10. Conduite de fluides confectionnée selon l'une des revendications 1 à 9,
**caractérisée en ce qu'**à chaque extrémité de la conduite tubulaire (4a) chauffante est raccordé un raccord de conduite (1) et **en ce que** la conduite tubulaire (4a) est enroulée avec deux enroulements de fil (29a, b) s'étendant parallèlement.

11. Conduite de fluides confectionnée selon la revendication 10,
**caractérisée en ce que** les fils chauffants (14) du raccord de conduite (1) et les enrouements de fil (29a, b) de la conduite tubulaire (4a) sont reliés de manière à former un circuit série électrique, dans lequel les extrémités de raccordement sont guidées vers l'extérieur pour raccorder une alimentation en tension extérieure du circuit série dans la zone d'un raccord de conduite (1).

12. Conduite de fluides confectionnée selon la revendication 10,
**caractérisée en ce que** le fil chauffant (14) de l'un des raccords de conduite (1) est respectivement connecté électriquement à l'un des enroulements de fil (29a, b) de la conduite tubulaire (4a), dans laquelle les extrémités de raccordement des deux circuits série sont respectivement guidées vers l'extérieur sur l'un des deux raccords de conduite (1) pour raccorder une alimentation en tension et/ou pour établir une autre connexion.

13. Conduite de fluides confectionnée selon l'une des revendications 1 à 12,
**caractérisée en ce que** le conducteur chauffant (29) est disposé ou réalisé le long de la conduite tubulaire (4a) de manière à ce que sa résistance électrique varie par sections afin de générer des puissances de chauffage différentes par sections.
